(19) Europäisches Patentamt
European Patent Office
Office européen des brevets

(11) **EP 2 492 000 A1**

(12) **EUROPEAN PATENT APPLICATION**
published in accordance with Art. 153(4) EPC

(43) Date of publication:
**29.08.2012 Bulletin 2012/35**

(51) Int Cl.:
**B01D 65/02** (2006.01)   **B01D 63/02** (2006.01)
**B01D 65/06** (2006.01)   **C02F 1/44** (2006.01)
**C02F 3/12** (2006.01)

(21) Application number: **09850579.5**

(22) Date of filing: **22.10.2009**

(86) International application number:
**PCT/JP2009/068180**

(87) International publication number:
**WO 2011/048681 (28.04.2011 Gazette 2011/17)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Asahi Kasei Chemicals Corporation Tokyo 101-8101 (JP)**

(72) Inventor: **OKAMURA Daisuke Tokyo 101-8101 (JP)**

(74) Representative: **Strehl Schübel-Hopf & Partner Maximilianstrasse 54 80538 München (DE)**

(54) **METHOD FOR IMMERSION-TYPE WASHING OF SEPARATION MEMBRANE DEVICE AND SYSTEM FOR IMMERSION-TYPE WASHING OF SEPARATION MEMBRANE DEVICE**

(57)    The invention provides a cleaning process for an immersion-type separating membrane device that allows convenient and reliable cleaning of contaminants that have adhered onto membrane surfaces of separating membrane devices, as well as a cleaning system for an immersion-type separating membrane device. Cleaning is carried out by injecting the chemical solution from the filtered water side of the separating membrane device 3 with the separating membrane device 3 set in a tank 2, thereby allowing matter that is to be removed, on the membrane surface of the separating membrane device 3, to be cleaned by a simple procedure without requiring large amounts chemicals. The chemical solution is injected with the values of X (kPa), as the pressure difference between membranes before the start of cleaning during filtration, and Y (kPa), as the initial pressure difference between membranes at the initial injection of the chemical solution during back pressure cleaning, satisfying the relationship $-0.375X + 30 \leq Y \leq 0.5X + 80$. The chemical solution can permeate to the outer surface in the film thickness direction even at sections where the precipitated matter to be removed has become hardened. It is also possible to obtain sufficient time for reaction between the matter to be removed and the chemical solution. This allows removal of the matter to be removed throughout the entire separating membrane device.

**Fig.1**

## Description

### Technical Field

The present invention relates to a cleaning process for an immersion-type separating membrane device and to a cleaning system for an immersion-type separating membrane device.

### Background Art

Filtration membranes used for filtration of various types of raw water provide excellent filtration precision, require minimal installation space and facilitate operation and maintenance. For these reasons, filtration membranes are widely used in many different types of filtration equipment. Immersion-type separating membrane devices, in particular, have low space requirements and are well-suited for filtration of raw water with high turbidity. Immersion-type separating membrane devices have therefore come into greater use in recent years. However, when such immersion-type separating membrane devices are continuously used for filtration, the pores become obstructed by substances to be removed in the raw water adhering onto the membrane surfaces. The filtration performance of immersion-type separating membrane devices therefore decreases with time, eventually being no longer able to accomplish filtration. Gas cleaning and back pressure cleaning are commonly carried out to help maintain filtration performance. Gas cleaning is a method in which a gas such as air is introduced as air bubbles into the raw water side of a filtration membrane. Back pressure cleaning is a method in which a back pressure cleaning medium such as filtered water or clarified water is sprayed from the filtrate side in the reverse direction from the filtration direction, to remove adhered matter on the filtration surface of the membrane.
Addition of sodium hypochlorite which has an oxidizing effect on back pressure cleaning medium is also known as a method for increasing the cleaning effect. Methods of back pressure cleaning using ozone water (for example, Patent document 1) and methods of back pressure cleaning with ozonized pressurized air (for example, Patent document 2) are also known. In addition, methods of injecting ozonized air as air bubbles at the raw water side of the filtration membranes are also known (for example, Patent document 3).

### Citation List

### Patent Literature

[Patent document 1] Japanese Unexamined Patent Publication HEI No. 4-310220
[Patent document 2] Japanese Unexamined Patent Publication SHO No. 60-58222
[Patent document 3] Japanese Unexamined Patent Publication SHO No. 63-42703

### Summary of Invention

### Technical Problem

In order to remove matter adhering to the membrane surfaces to maintain high membrane filtration flux, it is effective to increase the flow rate during gas cleaning. Lengthening the gas cleaning time is also effective. Such methods, however, increase vibration on the filtration membrane during gas cleaning. Because of such load on filtration membranes, these methods are associated with the problem of short filtration membrane life. Back pressure cleaning methods using oxidizing agents such as sodium hypochlorite or ozone water, and methods of introducing air or ozonized air as air bubbles at the raw water sides of the filtration membranes are also effective for enhancing the cleaning effect. However, such methods do not always provide sufficiently stable membrane filtration flux, depending on the conditions including the turbidity of the raw water.
For example, when the separating membrane device used is a pressure-type separating membrane device with the membranes placed in a case, the case can be filled with a chemical agent. The separating membrane device can therefore provide an adequate cleaning effect in a relatively simple manner whether the contaminants adhering to the membrane surfaces are inorganic material or organic material. With immersion-type separating membrane devices, however, another possible method involves filling a chemical agent into the membrane immersion tank for cleaning of the separating membrane device. This method is associated with problems, including the requirement of a large amount of chemical agent and a complex procedure. Thus, a cleaning process has been sought that can conveniently and reliably clean contaminants that have adhered to the membrane surface of the immersion-type separating membrane device.

The present invention has been accomplished with the aim of solving the aforementioned problems, and its object is to provide a cleaning process for an immersion-type separating membrane device that allows convenient and reliable cleaning of contaminants that have adhered onto membrane surfaces of separating membrane devices, as well as a cleaning system for an immersion-type separating membrane device.

**Solution to Problem**

The present inventors have found that matter to be removed from the membrane surfaces in a separating membrane device can be cleaned off by a simple procedure without using large amounts of chemicals, by injecting a chemical from the filtered water side for cleaning to dissolve the matter to be removed, while the separating membrane device is immersed in a tank filled with a liquid to be filtered. The present inventors have also found that the chemicals cannot easily permeate to the outer surface in the film thickness direction if matter to be removed is firmly adhering to the membrane. It was shown, in particular, that when the membrane contaminants are inorganic materials, contamination is caused by deposition of inorganic materials on the outer membrane side in the film thickness direction. Once deposition of inorganic materials has occurred, the deposited inorganic material firmly adheres to the membrane. In such cases, thorough cleaning of the entire separating membrane device cannot be accomplished by methods wherein a chemical solution is injected from the back pressure cleaning side while the separating membrane device is set in a tank, because the chemical solution flows out to the membrane outer surfaces only from the areas of relatively low contamination even if the chemical solution is injected with a low pressure difference between membranes. Also, a reaction time sufficient for reacting the mater to be removed with the chemical solution cannot be obtained even if the chemical solution is caused to flow at an excessively high speed. The present inventors have shown, as a result of much ardent research, that an optimum value exists for the pressure difference between membranes when a chemical solution is injected, depending on the degree of clogging of the membrane. When the chemical solution is injected at the optimum pressure difference between membranes, the chemical solution can pervade across the entire separating membrane device to remove the removable matter that has adhered onto the membrane outer surfaces. In other words, when the membranes are relatively uncontaminated and a low pressure difference exists between membranes for filtration of a liquid to be filtered, the chemical solution does not reach the contaminated sections unless the chemical solution is injected with a higher pressure difference between membranes. When the pressure difference between membranes is too high during injection of the chemical solution, on the other hand, the chemical solution flows too quickly resulting in insufficient reaction time for removal of the matter to be removed. Conversely, if the pressure difference between membranes is high during filtration of the liquid to be filtered, the chemical solution can reach the contaminated sections even if the chemical solution is injected with a lower pressure difference between membranes. Specifically, the present inventors found that injection of a chemical solution is preferably carried out under conditions satisfying the relationship $-0.375X + 30 \leq Y \leq 0.5X + 80$, where X (kPa) is the pressure difference between membranes during filtration of the liquid to be filtered before cleaning and Y (kPa) is the initial pressure difference between membranes upon injection of the chemical solution. Here, $0 < X < 80$.

Thus, if the chemical solution is injected with a suitable pressure difference between membranes depending on the degree of contamination of the membrane surfaces, the chemical solution can reach to the outer surface in the film thickness direction, even at sections where the matter to be removed is firmly hardened. In addition, this method allows a suitable contact time for contact between the matter to be removed and the chemical solution, so that the matter to be removed can react with the chemical solution. Consequently, this method can effectively clean off matter to be removed that has adhered onto the membrane surfaces throughout the entire separating membrane device.

The cleaning process for an immersion-type separating membrane device according to the invention is a cleaning process for an immersion-type separating membrane device set in a tank filled with a liquid to be filtered for membrane separation of a liquid to be filtered, characterized in that a chemical solution is injected with an initial pressure difference between membranes satisfying the following inequality (1), where X (kPa) is the pressure difference between membranes before the start of cleaning and Y (kPa) is the initial pressure difference between membranes upon injection of the chemical solution from the filtered water side of the separating membrane device.

$$-0.375X + 30 \leq Y \leq 0.5X + 80: (1)$$

$$(0 < X < 80).$$

According to this cleaning process for an immersion-type separating membrane device, cleaning is carried out by injecting the chemical solution from the filtered water side of the separating membrane device with the separating membrane device set in a tank, thereby allowing matter to be removed on the membrane surfaces in the separating membrane device to be cleaned by a simple procedure without requiring large amounts chemicals. Furthermore, by injecting the chemical solution in a manner that satisfies the relationship $-0.375X + 30 \leq Y \leq 0.5X + 80$, it is possible for the chemical solution to permeate to the outer surface in the film thickness direction even at sections where the precipitated matter that is to be removed has hardened. It is also possible to obtain sufficient time for reaction between the matter to be removed and the chemical solution. This will allow removal of the matter to be removed throughout the entire separating membrane device. Thus, cleaning of contaminants adhering to the membrane surfaces in the separating membrane device can be accomplished conveniently and reliably, i.e. rapidly with minimal chemical solution.

In the cleaning process for an immersion-type separating membrane device according to the invention, X is preferably such that $10 < X < 50$. The condition $X < 50$ will inhibit unevenness in the cleaning. Also, the condition $10 < X$ can prevent increased cleaning costs caused by greater cleaning frequency.

In the cleaning process for an immersion-type separating membrane device according to the invention, the chemical solution is preferably an acidic liquid with a concentration of at least 1 wt%, and the injection rate of the chemical solution is preferably 1-3 L per 1 $m^2$ membrane area of the separating membrane device. This will allow sufficient cleaning when the matter to be removed that has adhered onto the membrane surfaces of the separating membrane device is inorganic material.

When the separating membrane device used in the cleaning process for an immersion-type separating membrane device according to the invention is based on a separating membrane activated sludge process, the acidic liquid is preferably an organic acid.

The cleaning system for an immersion-type separating membrane device according to the invention is a cleaning system for an immersion-type separating membrane device wherein the device is set in a tank filled with a liquid to be filtered for membrane separation of the liquid to be filtered, and it is characterized by comprising a chemical solution tank holding a chemical solution, a back pressure cleaning pump that injects the chemical solution in the chemical solution tank into the separating membrane device from the filtered water side, and pressure-adjusting means which adjusts the pressure of the chemical solution injected into the separating membrane device.

According to this cleaning system for an immersion-type separating membrane device, cleaning is carried out by injecting the chemical solution from the filtered water side of the separating membrane device with the separating membrane device set in a tank, thereby allowing matter that is to be removed on the membrane surfaces in the separating membrane device to be cleaned by a simple procedure without requiring large amounts chemicals. In addition, by adjusting the pressure of the chemical solution with the pressure-adjusting means, it is possible to inject the chemical solution with an optimal pressure difference between membranes.

In the cleaning system for an immersion-type separating membrane device according to the invention, the pressure-adjusting means preferably adjusts the pressure of the chemical solution based on the pressure difference between membranes before the start of cleaning. If it is based on the pressure difference between membranes before the start of cleaning, it will be possible to more optimally adjust the pressure of the chemical solution depending on the contaminated condition of the membrane.

Moreover, the pressure-adjusting means in the cleaning system for an immersion-type separating membrane device according to the invention preferably adjusts the pressure so that the chemical solution is injected at an initial pressure difference between membranes that satisfies the following inequality (1), where X (kPa) is the pressure difference between membranes before the start of cleaning and Y (kPa) is the initial pressure difference between membranes during injection of the chemical solution by the back pressure cleaning pump.

$$-0.375X + 30 \leq Y \leq 0.5X + 80: (1)$$

$$(0 < X < 80).$$

By thus injecting the chemical solution in a manner that satisfies the relationship $-0.375X + 30 \leq Y \leq 0.5X + 80$, it is possible for the chemical solution to permeate to the outer surface in the film thickness direction even at sections where the precipitated matter to be removed has hardened. It is also possible to obtain sufficient time for reaction between the matter to be removed and the chemical solution. This will allow removal of the matter to be removed throughout the entire separating membrane device. Thus, cleaning of contaminants adhering to the membrane surfaces in the separating membrane device can be accomplished conveniently and reliably, i.e. rapidly with minimal chemical solution.

**Advantageous Effects of Invention**

According to the invention, cleaning of contaminants adhering to the membrane surfaces in a separating membrane device can be accomplished conveniently and reliably.

**Brief Description of Drawings**

Fig. 1 is a block diagram showing an example of a cleaning system using an immersion-type separating membrane device according to an embodiment of the invention.
Fig. 2 is a graph plotting the values of X and Y for the examples and comparative examples.

**Description of Embodiments**

Preferred embodiments of the cleaning process and cleaning system for an immersion-type separating membrane device according to the invention will now be explained with reference to the accompanying drawings.

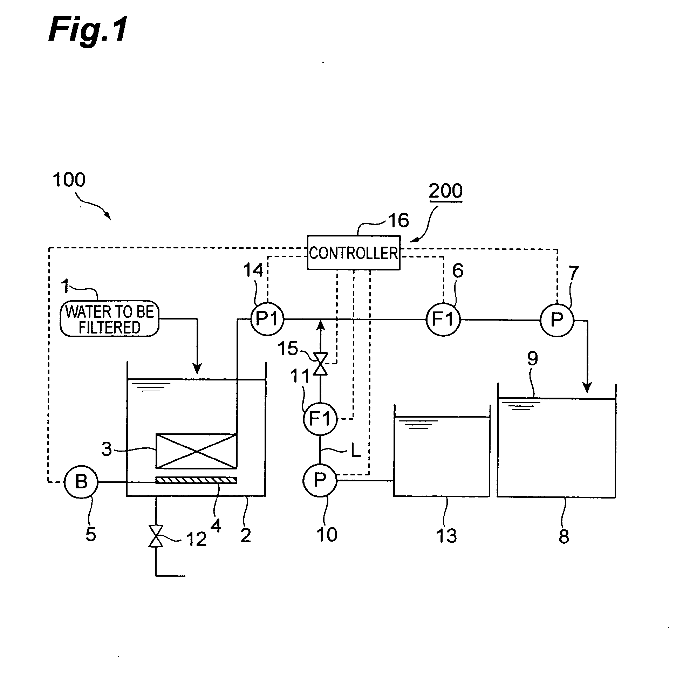

Fig. 1 is a block diagram showing an example of an immersion-type separating membrane system 100 incorporating a cleaning system 200 that performs the cleaning process for an immersion-type separating membrane device according to an embodiment of the invention. The immersion-type separating membrane system 100 comprises a dipping tank 2, a separating membrane device 3, an air diffuser 4, a blower 5, a filtered water flowmeter 6, a suction pump 7, a filtered water tank 8, a drainage valve 12 and a cleaning system 200.

The water to be filtered 1 is introduced continuously or intermittently into the dipping tank 2. The separating membrane device 3 incorporating a separating membrane module is immersed in the dipping tank 2. The separating membrane device 3 can accomplish filtration treatment of the water to be filtered 1. The air diffuser 4 is situated below the separating membrane device 3 in the dipping tank 2. The air diffuser 4 can diffuse gas (air) supplied from the blower 5, in the form of air bubbles. The drainage valve 12 is mounted in the dipping tank 2. The suction pump 7 is connected to the separating membrane device 3 via the filtered water flowmeter 6. The suction pump 7 performs the function of sucking in the filtered water. The suction pump 7 holds the drawn up treatment water as filtered water 9 in the filtered water tank 8. The filtered water flowmeter 6 measures the flow rate of the filtered water that has been drawn up by the suction pump 7.

The cleaning system 200 comprises a back pressure cleaning pump 10, a flowmeter 11, a chemical solution tank 13, a compound pressure gauge 14, a pressure control valve 15 and a controller 16. The compound pressure gauge 14 is connected between the filtered water flowmeter 6 and the separating membrane device 3. The chemical solution tank 13 is connected between the compound pressure gauge 14 and the filtered water flowmeter 6 via a chemical solution-injection line L. In the chemical solution-injection line L there are connected a back pressure cleaning pump 10, a flowmeter 11 and a pressure control valve 15, in that order from the chemical solution tank 13 end. The controller 16 is connected to the back pressure cleaning pump 10, flowmeter 11, compound pressure gauge 14 and pressure control valve 15. The controller 16 may also be connected to the filtered water flowmeter 6, suction pump 7 and blower 5, to allow control of the back pressure cleaning operation and control of the filtration operation. This may be separately provided as a back pressure cleaning operation controller and filtration operation controller. The cleaning system 200 has the function of removing matter to be removed on the membrane surfaces in the separating membrane device 3, by back pressure cleaning. The matter to be removed may be inorganic material or organic material, but is preferably inorganic material.

The chemical solution tank 13 is a tank that holds the chemical solution for back pressure cleaning. The chemical solution held in the chemical solution tank 13 is preferably an acidic liquid with a concentration of 1 wt% or greater when the matter to be removed is inorganic material. When the inorganic material of the matter to be removed is iron or manganese, the chemical solution is preferably oxalic acid, and when the inorganic material is calcium, it is preferably hydrochloric acid or nitric acid. When the separating membrane device operates based on a separating membrane activated sludge process, it is preferred to use an organic acid such as oxalic acid or citric acid that is biodegradable. When the matter to be removed is organic material, the chemical solution is preferably Na hypochlorite.

The back pressure cleaning pump 10 has the function of injecting the chemical solution in the chemical solution tank 13 into the separating membrane device 3 via the chemical solution-injection line L. The flowmeter 11 has the function of measuring the flow rate of the chemical solution being conveyed from the back pressure cleaning pump 10. The pressure control valve 15 has the function of adjusting the pressure during supply of the chemical solution. The compound pressure gauge 14 has the function of measuring the pressure difference between membranes during filtration and the pressure difference between membranes during back pressure cleaning.

The controller 16 has the function of receiving the measured values from the compound pressure gauge 14 and flowmeter 11. The controller 16 functions to operate the back pressure cleaning pump 10 by outputting a control signal to the back pressure cleaning pump 10. The controller 16 also functions to carry out pressure adjustment by outputting a control signal to the pressure control valve 15. The controller 16 also functions to control the pressure control valve 15 based on the received measured values, so that the pressure difference between membranes is at the optimum value. Alternatively, the controller 16 functions to control the output of the back pressure cleaning pump 10 based on the received measured values, so that the pressure difference between membranes is at the optimum value. The controller 16, pressure control valve 15 and back pressure cleaning pump 10 thus function as pressure-adjusting means. The controller 16 also functions to turn off the suction pump 7 during back pressure cleaning, and restart the suction pump 7 after back pressure cleaning has been completed. The controller 16 also preferably turns off the blower 5 during back pressure cleaning. This will cause the chemical solution to stop near the membrane outer surfaces.

The present inventors have found that a chemical solution cannot easily permeate to the outer surface in the film thickness direction if matter to be removed is firmly adhering to the membranes in a separating membrane device 3. The present inventors have also found, in particular, that when the membrane contaminants are inorganic materials, contamination of the membranes is caused by deposition of the inorganic materials on the outer membrane side in the film thickness direction. It was further found that, since the deposited inorganic materials are extremely hard, it is difficult for the chemical solution to permeate to the outer surface in the film thickness direction at deposited sections once the inorganic materials have been deposited on the membrane surfaces. It was yet further discovered that, in such cases, methods wherein a chemical solution is injected from the back pressure cleaning side while the separating membrane device 3 is set in the dipping tank 2 cannot accomplish thorough cleaning of the entire separating membrane device 3 because the chemical solution flows out to the membrane outer surface only from the areas of relatively low contamination even if the chemical solution is injected with a low pressure difference between membranes. Thus, as a result of much diligent research, the present inventors have shown that it is sufficient for the injection to be carried out with a higher pressure difference between membranes, and that a suitable contact time is necessary for reaction between the matter to be removed and the chemical solution. The present inventors further found that it is preferred for the values of X (kPa), as the pressure difference between membranes before the start of cleaning during filtration, and Y (kPa) as the initial pressure difference between membranes upon injection of the chemical solution during back pressure cleaning, to satisfy the relationship $-0.375X + 30 \leq Y \leq 0.5X + 80$, as the optimum values for the pressure difference between membranes. Here, $0 < X < 80$.

The controller 16 controls the pressure control valve 15 or back pressure cleaning pump 10 so that the relationship $-0.375X + 30 \leq Y \leq 0.5X + 80$ is satisfied during back pressure cleaning. Specifically, the controller 16 receives the pressure difference between membranes X before back pressure cleaning, based on the measured value outputted from the compound pressure gauge 14. The controller 16 also calculates the optimal initial pressure difference between membranes Y, based on the pressure difference between membranes X, and controls the pressure control valve 15 or back pressure cleaning pump 10. The pressure difference between membranes X is the value before cleaning according to the present application has been started. Specifically, it is the value of the pressure difference between membranes preferably from 1 hour to 1 minute, and even more preferably from 10 minutes to 1 minute, before the start of back pressure cleaning. Since the value of X inhibits unevenness of cleaning, preferably $X < 50$ and more preferably $X < 40$. Also, since the value of X inhibits cleaning cost increase that occurs by higher cleaning frequency, preferably $10 < X$ and more preferably $20 < X$. The controller 16 preferably conducts cleaning of the separating membrane device 3 by back pressure cleaning for 1-90 minutes.

An operating method will now be explained, using an immersion-type separating membrane system 100 constructed in this manner and the cleaning system 200 according to this embodiment. For example, the filtration may be carried out for any set filtration time, and the water to be filtered 1 may be continuously or intermittently introduced into the dipping tank 2 during filtration and the filtered water 9 obtained by sucking with the suction pump 7 through the separating membrane device 3. The filtered water 9 is held in the filtered water tank 8 as treated water.

The cleaning system 200 accomplishes back pressure cleaning for any set time after the preset time for the filtration time has elapsed. Specifically, the controller 16 turns off the suction pump 7 and the blower 5. The controller 16 also calculates the value Y (kPa) for the initial pressure difference between membranes as a target, based on the value X (kPa) for the pressure difference between membranes before the start of back pressure cleaning. The target value of Y may be set to any target value so long as it satisfies the inequality $-0.375X + 30 \leq Y \leq 0.5X + 80$. The controller 16 controls the pressure control valve 15 or back pressure cleaning pump 10 so that the pressure difference between membranes is the target value. During back pressure cleaning, the back pressure cleaning pump 10 introduces the filtered water 9 into the separating membrane device 3 in the reverse direction with respect to filtration.

Alternatively, the controller 16 may monitor the pressure difference between membranes during filtration and initiate back pressure cleaning when the pressure difference between membranes reaches a prescribed threshold value.

As cleaning continues, the matter to be removed on the membranes in the separating membrane device is gradually removed. Thus, if the adjustment position of the pressure control valve 15 and the output of the back pressure cleaning pump 10 are kept constant, the pressure difference between membranes will fall as the cleaning time progresses.

After determining the adjustment position of the pressure control valve 15 and the output of the back pressure cleaning pump 10 so that the initial pressure difference between membranes is at the target value upon initial injection of the chemical solution, the controller 16 can maintain that state during cleaning. The pressure difference between membranes will gradually decrease in this case. Alternatively, the controller 16 may continuously control the pressure control valve 15 and back pressure cleaning pump 10 so that the pressure difference between membranes is constant during cleaning. The controller 16 may be based on any control method so long as the initial pressure difference between membranes Y (kPa) satisfies the relationship - $0.375X + 30 \leq Y \leq 0.5X + 80$.

The "initial pressure difference between membranes" defined as Y (kPa) will now be explained. Two control methods may be used when the controller 16 controls the pressure control valve 15 and back pressure cleaning pump 10 to satisfy the established initial pressure difference between membranes. In the first method, the controller 16 precalculates the adjustment position of the pressure control valve 15 and the output of the back pressure cleaning pump 10 so that the established initial pressure difference between membranes is satisfied, and then injects the chemical solution by operating the pressure control valve 15 and back pressure cleaning pump 10 based on the results of the calculation. In this case, the "initial pressure difference between membranes" is the pressure difference between membranes at the initial injection of the chemical solution. In the second method, the controller 16 operates the pressure control valve 15 and back pressure cleaning pump 10 at any control values at the initial injection of the chemical solution, and then adjusts the control values for the pressure control valve 15 and back pressure cleaning pump 10 based on the pressure difference between membranes after initial injection of the chemical solution. When the pressure difference between membranes after initial injection of the chemical solution is too low to satisfy the condition $-0.375X + 30 \leq Y \leq 0.5X + 80$, the controller 16 adjusts the control values for the pressure control valve 15 and back pressure cleaning pump 10 to increase the pressure difference between membranes so that the condition is satisfied. In this case, the "initial pressure difference between membranes" is the pressure difference between membranes after adjustment is complete. When the pressure difference between membranes after initial injection of the chemical solution is too high to satisfy the condition $-0.375X + 30 \leq Y \leq 0.5X + 80$, the controller 16 adjusts the control values for the pressure control valve 15 and back pressure cleaning pump 10 to decrease the pressure difference between membranes so that the condition is satisfied. In this case, the "initial pressure difference between membranes" is the pressure difference between membranes after adjustment is complete. When adjustment has been made because the condition is not satisfied even when the control values for the pressure control valve 15 and back pressure cleaning pump 10 have been precalculated, the "initial pressure difference between membranes" is the pressure difference between membranes upon completion of the adjustment.

Thus, in the cleaning process and cleaning system 200 for an immersion-type separating membrane device according to this embodiment, cleaning is carried out by injecting the chemical solution from the filtered water side of the separating membrane device 3 with the separating membrane device 3 set in a tank 2, thereby allowing matter to be removed that is on the membrane surfaces in the separating membrane device 3 to be cleaned by a simple procedure without requiring large amounts chemicals. Furthermore, by injecting the chemical solution in a manner that satisfies the relationship $-0.375X + 30 \leq Y \leq 0.5X + 80$, it is possible for the chemical solution to permeate to the outer surface in the film thickness direction even at sections where the precipitated matter that is to be removed has hardened. It is also possible to obtain sufficient time for reaction between the matter to be removed and the chemical solution. This will allow removal of the matter to be removed throughout the entire separating membrane device. Thus, cleaning of contaminants adhering to the membrane surfaces in the separating membrane device can be accomplished conveniently and reliably, i.e. rapidly with minimal chemical solution.

The cleaning system 200 of the immersion-type separating membrane device according to this embodiment allows the chemical solution to be injected with the optimal pressure difference between membranes by adjusting the pressure of the chemical solution by the pressure control valve 15 or back pressure cleaning pump 10.

The pressure-adjusting means for the pressure control valve 15 or back pressure cleaning pump 10 in the cleaning system 200 of the immersion-type separating membrane device according to this embodiment allows the pressure of the chemical solution to be adjusted based on the pressure difference between membranes at the start of cleaning. If it is based on the pressure difference between membranes before the start of cleaning, it will be possible to more optimally adjust the pressure of the chemical solution depending on the contaminated condition of the membrane.

[Example 1]

The immersion-type separating membrane system 100 shown in Fig. 1 was operated to obtain clean water from river surface water. The membrane module used in the separating membrane device 3 had polyvinylidene fluoride hollow fiber MF (microfiltration) membranes, a nominal pore size of 0.1 $\mu$m and an effective membrane area of 25 m$^2$. The outer dimensions of the membrane module were diameter: 180 mm, length: 2000 mm (circular cylindrical shape). The dipping tank 2 was cylindrical with a diameter of 200 mm and a height of 2500 mm.

As the filtration time progressed, the pressure difference between membranes in each separating membrane device increased to different pressure differences between membranes. The pressure difference between membranes was not reduced even after cleaning the separating membrane device with sodium hypochlorite. The membrane sides displayed a brown color, and EDX analysis indicated deposition of iron. A 50 L 1.5% oxalic acid aqueous solution was therefore prepared as a chemical solution in a chemical solution tank. The chemical solution was injected from the filtered water side by a cleaning system, with the separating membrane device immersed in the tank. The chemical solution injection rate during this time was 2 L per 1 $m^2$ membrane area.

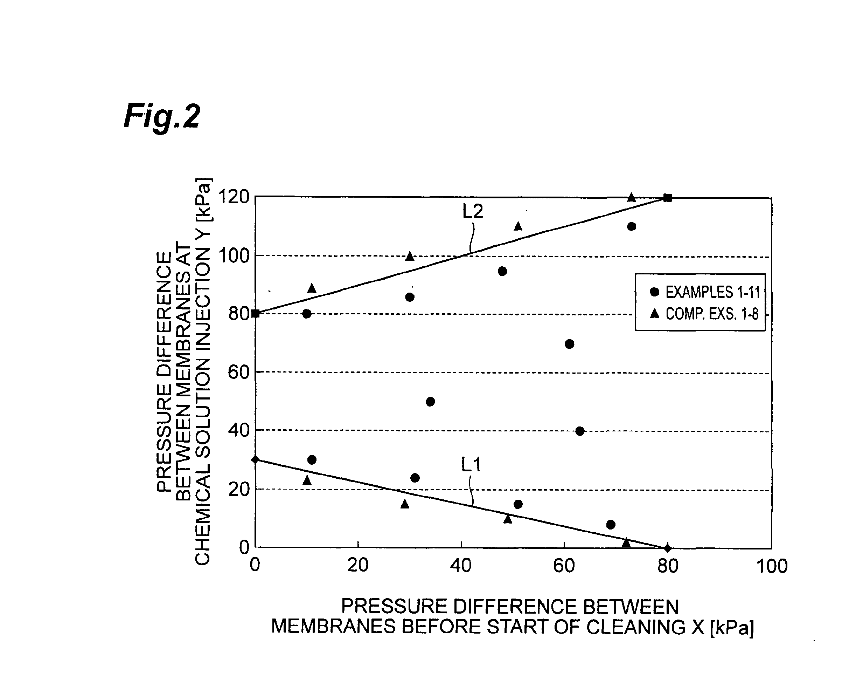

The cleaning system used a pressure control valve to regulate the value Y (kPa) for the initial pressure difference between membranes at the time of injection of the chemical solution, based on the value X (kPa) for the pressure difference between membranes during filtration before the start of cleaning. The value X for the pressure difference between membranes was the value 1 minute before the start of cleaning. Specifically, as shown in Table 1, back pressure cleaning was carried out under the conditions shown for Examples 1-11, and back pressure cleaning was carried out under the conditions shown for Comparative Examples 1-8. Fig. 2 is a graph plotting the values of X and Y for the examples and comparative examples. In Fig. 2, line L1 represents Y = -0.375X + 30. Also in Fig. 2, line L2 represents Y = 0.5X + 80. As shown in Fig. 2, Examples 1-11 all satisfied the condition -0.375X + 30 ≤ Y ≤ 0.5X + 80. On the other hand, Comparative Examples 1-8 all failed to satisfy the condition -0.375X + 30 ≤ Y ≤ 0.5X + 80. The cleaning in Examples 1-11 and Comparative Examples 1-8 was carried out until no chemical solution remained in the chemical solution tank. That is, the cleaning time is the time from the start of chemical solution injection until the chemical solution disappeared from the chemical solution tank. The adjustment position of the pressure control valve and the back pressure cleaning pump output during cleaning were kept constant from the initial injection of the chemical solution. The control values for the pressure control valve and back pressure cleaning pump were precalculated for the target value of Y. Therefore, the "initial pressure difference between membranes" is the pressure difference between membranes at the initial injection of the chemical solution.

After cleaning under the conditions for Examples 1-11 and Comparative Examples 1-8, filtration was again performed with each separating membrane device. The pressure difference between membranes Z (kPa) during filtration was measured during this time. The cleaning time, i.e. the chemical solution injection time, was also measured. The measurement results are shown in Table 1. The cleaning recovery factor (%) was calculated for each example and comparative example, based on the measurement results. The cleaning recovery factor can be calculated as 100 × (X-Z)/X. The calculation results are shown in Table 1. As seen in Table 1, Examples 1-11 all had high cleaning recovery factors of 60% or greater. In Examples 3-11 wherein X was ≥30 kPa, the cleaning recovery factors were particularly high at ≥79%. On the other hand, Comparative Examples 1-8 all had low cleaning recovery factors of below 20%, despite using the same amount of chemical solution as Examples 1-11. Examples 1, 3, 6 and 10 and Comparative Examples 2, 4, 6 and 8, which had high Y values and injection of the chemical solution at high pressure, will now be compared. Although there was no significant difference in the pressure difference between membranes during injection of the chemical solution between Examples 1, 3, 6 and 10 and Comparative Examples 2, 4, 6 and 8, the chemical solution injection times for Comparative Examples 2, 4, 6 and 8 were much shorter than Examples 1, 3, 6 and 10. This suggests that in Comparative Example 2, 4, 6 and 8 the chemical solution flowed too quickly leaving the separating membrane device without sufficient reaction between the chemical solution and the matter to be removed. On the other hand, it suggests that sufficient reaction took place between the chemical solution and the matter to be removed in Examples 1, 3, 6 and 10. Thus, the chemical solution and the matter to be removed reacted sufficiently even with the same amount of chemical solution, and the examples therefore had significantly higher cleaning efficiency than the comparative examples. It is therefore interpreted that a high cleaning recovery factor can be obtained without require large amounts of chemical solution, if the condition -0.375X + 30 ≤ Y ≤ 0.5X + 80 is satisfied.

[Table 1]

|  | Pressure difference between membranes before cleaning [kPa] | Pressure difference between membranes at chemical solution injection [kPa] | Pressure difference between membranes after cleaning [kPa] | Cleaning recovery factor [%] | Injection time [min] |
|---|---|---|---|---|---|
| Example 1 | 10 | 80 | 3 | 70 | 2 |
| Example 2 | 11 | 30 | 4 | 64 | 5 |
| Example 3 | 30 | 86 | 4 | 87 | 2 |

(continued)

|  | Pressure difference between membranes before cleaning [kPa] | Pressure difference between membranes at chemical solution injection [kPa] | Pressure difference between membranes after cleaning [kPa] | Cleaning recovery factor [%] | Injection time [min] |
|---|---|---|---|---|---|
| Example 4 | 31 | 24 | 6 | 81 | 5 |
| Example 5 | 34 | 50 | 7 | 79 | 4 |
| Example 6 | 48 | 95 | 5 | 90 | 2 |
| Example 7 | 51 | 15 | 5 | 90 | 10 |
| Example 8 | 61 | 70 | 4 | 93 | 7 |
| Example 9 | 63 | 40 | 7 | 89 | 7 |
| Example 10 | 73 | 110 | 7 | 90 | 3 |
| Example 11 | 69 | 8 | 9 | 87 | 15 |
| Comp. Ex. 1 | 10 | 23 | 9 | 10 | 3 |
| Comp. Ex. 2 | 11 | 89 | 9 | 18 | 0.5 |
| Comp. Ex. 3 | 29 | 15 | 25 | 14 | 7 |
| Comp. Ex. 4 | 30 | 100 | 26 | 13 | 0.5 |
| Comp. Ex. 5 | 49 | 10 | 45 | 8 | 10 |
| Comp. Ex. 6 | 51 | 110 | 46 | 10 | 0.5 |
| Comp. Ex. 7 | 72 | 2 | 67 | 7 | 20 |
| Comp. Ex. 8 | 73 | 120 | 68 | 7 | 0.5 |

[Explanation of Symbols]

1: Water to be filtered, 2: dipping tank, 3: separating membrane device, 4: air diffuser, 5: blower, 6: membrane filtration water flow meter, 7: suction pump, 8: filtration water tank, 9: filtered water, 10: back pressure cleaning pump, 11: back pressure cleaning water flow meter, 12: drainage valve, 13: chemical solution tank, 14: compound pressure gauge, 15: pressure control valve, 16: controller, 100: immersion-type separating membrane system, 200: cleaning system.

**Claims**

1.  A cleaning process for an immersion-type separating membrane device, which is a cleaning process for an immersion-type separating membrane device set in a tank filled with a liquid to be filtered for membrane separation of the liquid to be filtered, **characterized in that** a chemical solution is injected with an initial pressure difference between membranes satisfying the following inequality (1), where X (kPa) is the pressure difference between membranes before the start of cleaning and Y (kPa) is the initial pressure difference between membranes upon injection of the chemical solution from the filtered water side of the separating membrane device.

$$-0.375X + 30 \leq Y \leq 0.5X + 80: (1)$$

$$(0 < X < 80).$$

2.  The cleaning process for an immersion-type separating membrane device according to claim 1, **characterized in**

**that** X satisfies 10 < X < 50.

3.  The cleaning process for an immersion-type separating membrane device according to claim 1 or 2, **characterized in that** the chemical solution is an acidic liquid with a concentration of 1 wt% or greater.

4.  The cleaning process for an immersion-type separating membrane device according to any one of claims 1 to 3, **characterized in that** the chemical solution injection rate is 1-3 L per 1 $m^2$ membrane area of the separating membrane device.

5.  The cleaning process for an immersion-type separating membrane device according to any one of claims 1 to 4, **characterized in that** when the separating membrane device is based on a separating membrane activated sludge process, the acidic liquid is an organic acid.

6.  The cleaning process for an immersion-type separating membrane device according to any one of claims 1 to 5, **characterized in that** the separating membrane device employs hollow fiber membranes.

7.  A cleaning system for an immersion-type separating membrane device wherein the device is set in a tank filled with a liquid to be filtered for membrane separation of the liquid to be filtered, the cleaning system for an immersion-type separating membrane device being **characterized by** comprising
    a chemical solution tank holding a chemical solution,
    a back pressure cleaning pump that injects the chemical solution in the chemical solution tank into the separating membrane device from the filtered water side,
    and pressure-adjusting means which adjusts the pressure of the chemical solution injected into the separating membrane device.

8.  A cleaning system for an immersion-type separating membrane device according to claim 7, **characterized in that** the pressure-adjusting means adjusts the pressure of the chemical solution based on the pressure difference between membranes at the start of cleaning.

9.  A cleaning system for an immersion-type separating membrane device according to claim 7, **characterized in that** the pressure-adjusting means adjusts the pressure so that the chemical solution is injected at an initial pressure difference between membranes that satisfies the following inequality (1), where X (kPa) is the pressure difference between membranes before the start of cleaning and Y (kPa) is the initial pressure difference between membranes during injection of the chemical solution by the back pressure cleaning pump.

$$-0.375X + 30 \leq Y \leq 0.5X + 80 : (1)$$

$$(0 < X < 80).$$

# Fig.1

Fig.2

EP 2 492 000 A1

**INTERNATIONAL SEARCH REPORT**

| | International application No. |
|---|---|
| | PCT/JP2009/068180 |

A. CLASSIFICATION OF SUBJECT MATTER
*B01D65/02*(2006.01)i, *B01D63/02*(2006.01)i, *B01D65/06*(2006.01)i, *C02F1/44*
(2006.01)i, *C02F3/12*(2006.01)i

According to International Patent Classification (IPC) or to both national classification and IPC

B. FIELDS SEARCHED

Minimum documentation searched (classification system followed by classification symbols)
B01D65/02, B01D63/02, B01D65/06, C02F1/44, C02F3/12

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-70685 A (Daicel Chemical Industries, Ltd.), 07 March 2000 (07.03.2000), entire text; all drawings (Family: none) | 1-9 |
| Y | JP 7-313850 A (Kubota Corp.), 05 December 1995 (05.12.1995), entire text; all drawings & US 5647988 A          & DE 4445682 A & AU 683939 B | 1-9 |
| Y | JP 2007-61697 A (Toray Industries, Inc.), 15 March 2007 (15.03.2007), entire text; all drawings (Family: none) | 1-9 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search    08 December, 2009 (08.12.09) | Date of mailing of the international search report    15 December, 2009 (15.12.09) |
|---|---|
| Name and mailing address of the ISA/    Japanese Patent Office | Authorized officer |
| Facsimile No. | Telephone No. |

Form PCT/ISA/210 (second sheet) (April 2007)

13

**INTERNATIONAL SEARCH REPORT**

| International application No. |
| --- |
| PCT/JP2009/068180 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2006-21066 A  (Organo Corp.),<br>26 January 2006 (26.01.2006),<br>entire text; all drawings<br>(Family: none) | 1-9 |
| Y | JP 2000-300969 A  (Mitsubishi Rayon Co., Ltd.),<br>31 October 2000 (31.10.2000),<br>entire text; all drawings<br>(Family: none) | 1-9 |

Form PCT/ISA/210 (continuation of second sheet) (April 2007)

**EP 2 492 000 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4310220 A
- JP 60058222 A
- JP 63042703 A